# EUROPEAN PATENT SPECIFICATION

(11) **EP 3 624 032 B1**
(45) Date of publication and mention of the grant of the patent: **16.08.2023**
(21) Application number: 18194571.8
(22) Date of filing: 14.09.2018
(51) Int. Cl.: H04L 69/08, H04L 69/18, G06Q 10/109, G06F 16/25, G06Q 10/20, G07C 9/37, H04L 67/565, H04L 67/125, H04L 67/568

(54) **APPARATUS, METHOD AND COMPUTER PROGRAM FOR LINKING A PLURALITY OF NETWORK INPUT/OUTPUT ENTITIES**
VORRICHTUNG, VERFAHREN UND COMPUTER PROGRAM ZUR VERBINDUNG VERSCHIEDENER EIN-/AUSGANG-NETZEINHEITEN
DISPOSITIF, PROCÉDÉ ET PROGRAMME INFORMATIQUE POUR L'INTERCONNEXION D'ENTITÉS DE RÉSEAU ENTRÉE/SORTIE

(43) Date of publication of application: 18.03.2020
(73) Proprietor: RDS Global Limited, Derby, Derbyshire DE1 1BT (GB)
(72) Inventor: Flinn, Andrew, Derby, Derbyshire DE1 1BT (GB); Duley, Paul, Derby, Derbyshire DE1 1BT (GB)
(74) Representative: Swindell & Pearson Limited

(56) References cited:
- CN-A- 108 229 362
- JP-A- 2005 025 518
- US-A1- 2005 203 892
- US-A1- 2011 252 147
- US-A1- 2013 031 611
- US-A1- 2013 318 070
- US-A1- 2017 295 180

## Description

### TECHNOLOGICAL FIELD

Examples of the present disclosure relate to an apparatus, method and computer program for linking a plurality of network input/output entities. Some examples relate to an apparatus, method and computer program for linking a plurality of network input/output entities where different network input/output entities use different communication protocols.

### BACKGROUND

Systems which require linking of different network input/output entities or different physical input/output entities are known. For example in a vehicle maintenance facility a telephone system could be linked to a contacts application, a calendar application, an invoicing application, inventory applications, security devices, location tracking devices and other systems or devices. It can be useful if all these separate entities can be linked however this is not always feasible as the different entities could use different communication protocols.

US2005/203892 A1 discloses systems and methods for seamlessly integrating disparate data systems to securely, customizably and dynamically collaborate and share real-time information, and for providing intelligent data sharing that supports multiple standards concurrently and provides automatic conversioning of data information. A universal scripting language is used across disparate systems in coordination with dynamic interfacing technologies, data protocol and format conversion technologies, and transport-layer secure socket technologies. Information is transmitted and received across a plurality of disparate systems, applications, and/or devices, across a plurality of disparate frequencies, regardless of the protocol employed by each of the plurality of any disparate system, application and/or device. US2011/252147 A1 discloses a method and apparatus for accessing an enterprise resource planning system via a mobile device. The method includes parsing data from a host application access application into at least one object in an applicationspecific format, converting the data into an intermediate format that is compatible with a mobile device and communicating the converted data to the mobile device.

US2013/318070 A1 discloses a method, system, and computer program product for of processing database queries using the resource description framework (RDF) language through a gateway service. The method commences by receiving a database query (e.g., an SQL query) from an application, the query being in a first query language format, then converting the query into a SPARQL query format and submitting the converted query to a SPARQL endpoint. The SPARQL endpoint processes the SPARQL query (e.g., by accessing an RDF repository), and sends back the query results. A gateway service (e.g., a SPARQL gateway) then receives the SPARQL query results from the SPARQL endpoint and transforms the SPARQL query results into a format corresponding to the first query language format so the initiating application can process it natively. Several performance features are disclosed, including a method for achieving a quality of service level by concurrently submitting multiple SPARQL queries with different LIMIT clauses.

JP2005-025518 discloses a system for acquiring door state data for maintenance of a vehicle door and rewriting a door controlling program. When a second transceiver of a door drive control device, to which a personal computer is connected, receives command data from the personal computer, whether they are bound for the associated device or another device is determined from the address of the command data. If the destination is the associated device, door state data are read out from a non-volatile memory of the device, converted to a transmission format by a protocol used by the second transceiver, and transmitted to the personal computer. If the destination is another device, the command data are converted to a transmission format by a protocol used by a first transceiver and transmitted to the door drive control device. The device reads out door state data, converts them to the transmission format by the protocol and transmits them to the personal computer via the device.

### BRIEF SUMMARY

The present invention is as set out in the independent claims. Any examples/embodiments of the features described in the specification that do not fall under the scope of the independent claims are to be interpreted as examples useful for understanding various embodiments of the invention.

According to examples of the disclosure, there is provided an apparatus comprising means for: enabling communication with a plurality of network input/output entities wherein different network input/output entities are configured to use different communication protocols to communicate with the apparatus; maintaining a data warehouse where the data warehouse comprises data obtained from one or more of the plurality of network input/output entities using one or more different communication protocols; and enabling each of the plurality of network input/output entities to access data from the data warehouse by converting data from the data warehouse into a required format for the communication protocol used by the network input/output entities.

In some examples the apparatus may comprise means for enabling communication between at least a first network input/output entity using a first communication protocol and at least a second network input/output entity using a second communication protocol via the apparatus by causing the apparatus to convert data between the first and second communication protocols.

The communication via the apparatus may enable the first network input/output entity using the first communication protocol to be replaced with a third network input/output entity using a third communication protocol such that the third network input/output entity can communicate with the second network input/output entity without the second network input/output entity having to change communication protocols.

In some examples the apparatus may comprise means for determining that a first network input/output entity that used a first communication protocol has been replaced by a third network input/output entity that uses a third communication protocol and enabling the third network input/output entity to access the data warehouse using the third communication protocol.

In examples of the disclosure, the apparatus comprises means for obtaining data from a first network input/output entity using a first communication protocol, means for automatically finding actions associated with the obtained data in the data warehouse and means for sending a control signal to a second network input/output entity to enable the second network input/output entity to perform an action associated with the data.

In some examples the action may comprise a control of a physical system.

In some examples machine learning may be used to identify data within the data warehouse and enable one or more network input/output entities to perform an associated action.

In some examples the apparatus may comprise means for collecting data from the plurality of network input/output entities and storing the data in the data warehouse.

In some examples the apparatus may comprise means for enabling any of the plurality of network input/output entities to access the data warehouse to generate a report using data from the data warehouse.

In some examples the report may be provided to a user of the network input/output entity.

In some examples the report may cause an action by a system associated with the network input/output entity.

In some examples different communication protocols may be used by the plurality of network input/output entities comprises one or more of; Structure Query Language (SQL), Open Database Connectivity (ODBC), Telephony Application Programming Interface (TAPI), Blockchain.

According to examples of the disclosure, there is provided a method comprising enabling communication with a plurality of network input/output entities wherein different network input/output entities are configured to use different communication protocols to communicate with the apparatus; maintaining a data warehouse where the data warehouse comprises data obtained from one or more of the plurality of network input/output entities using one or more different communication protocols; and enabling each of the plurality of network input/output entities to access data from the data warehouse by converting data from the data warehouse into a required format for the communication protocol used by the network input/output entities.

According to examples of the disclosure, there is provided a computer program comprising computer program instructions that, when executed by processing circuitry, cause: enabling communication with a plurality of network input/output entities wherein different network input/output entities are configured to use different communication protocols to communicate with the apparatus; maintaining a data warehouse where the data warehouse comprises data obtained from one or more of the plurality of network input/output entities using one or more different communication protocols; and enabling each of the plurality of network input/output entities to access data from the data warehouse by converting data from the data warehouse into a required format for the communication protocol used by the network input/output entities.

### BRIEF DESCRIPTION

Some example embodiments will now be described with reference to the accompanying drawings in which:
Fig. 1 shows an apparatus according to examples of the disclosure;
Fig. 2 shows a network comprising an apparatus according to examples of the disclosure;
Fig. 3 shows a method that may be implemented using the example apparatus; and
Fig. 4 shows an example of the apparatus and network in use.

### DETAILED DESCRIPTION

Examples of the disclosure relate to an apparatus 101 which enables linking of a plurality of different network input/output entities 203. The different network input/output entities 203 are configured to use different communication protocols. The different network input/output entities 203 need not communicate directly with each other but instead communicate via the apparatus 101. The apparatus 101 enables translation of the data between the different communication protocols and so enables a smooth interconnection between the different network input/output entities 203. The apparatus 101 also maintains a data warehouse 205 which comprises data obtained from the different input/output network entities 203. The apparatus 101 enables the different input/output network entities 203 to access the same data warehouse 205 so that data can be shared across the network 201.

The network input/output entities 203 could be any suitable type of input/output entities. For instance, in some examples the apparatus 101 could be used in a garage or vehicle maintenance facility. In such examples the different network input/output entities 203 could comprise security systems, telephone systems, calendar applications, contact applications, inventory systems, input/output devices invoicing applications, tracking devices and any other suitable systems or input/output entities. It is to be appreciated that the examples of the disclosure could be used in other facilities and types of networks in other examples of the disclosure.

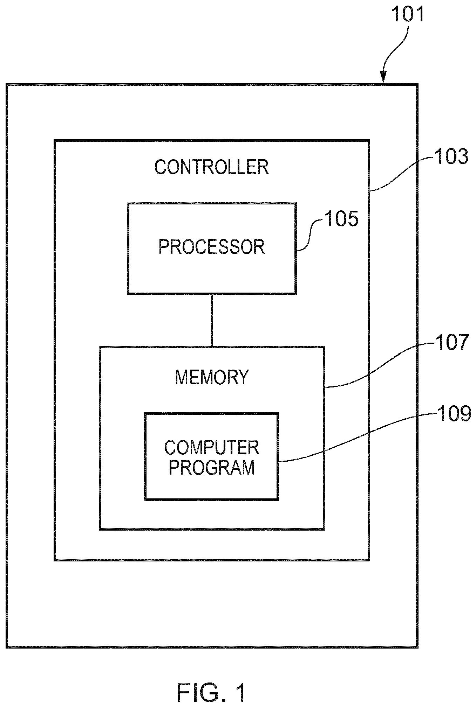

Fig 1 illustrates an example of an apparatus 101 that may be used in some examples of the disclosure. The apparatus 101 comprises a controller 103. Implementation of the controller 103 may be as controller circuitry. The controller 103 may be implemented in hardware alone, have certain aspects in software including firmware alone or can be a combination of hardware and software (including firmware).

As illustrated in Fig. 1 the controller 103 may be implemented using instructions that enable hardware functionality, for example, by using executable instructions of a computer program 109 in a general-purpose or special-purpose processor 105 that may be stored on a computer readable storage medium (disk, memory etc) to be executed by such a processor 105.

The processor 105 is configured to read from and write to the memory 107. The processor 105 may also comprise an output interface via which data and/or commands are output by the processor 105 and an input interface via which data and/or commands are input to the processor 105.

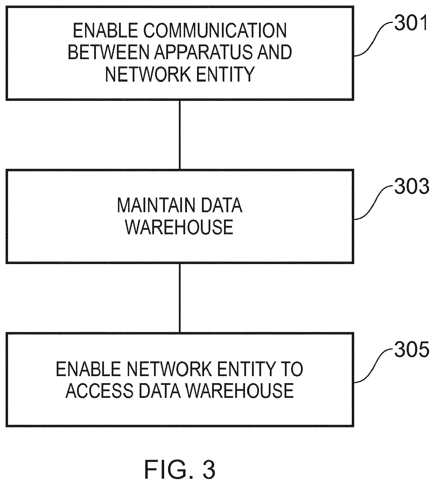

The memory 107 stores a computer program 109 comprising computer program instructions (computer program code) that controls the operation of the apparatus 101 when loaded into the processor 103. The computer program instructions, of the computer program 109, provide the logic and routines that enables the apparatus 101 to perform the methods illustrated in Fig. 3. The processor 105 by reading the memory 107 is able to load and execute the computer program 103.

The apparatus 101 therefore comprises: at least one processor 103; and at least one memory 107 including computer program code, the at least one memory 107 and the computer program code configured to, with the at least one processor 105, cause the apparatus 101 at least to perform: enabling communication with a plurality of network input/output entities 203 wherein different network input/output entities 203 are configured to use different communication protocols to communicate with the apparatus101; maintaining a data warehouse 205 where the data warehouse 205 comprises data obtained from one or more of the plurality of network input/output entities 203 using one or more different communication protocols; and enabling each of the plurality of network input/output entities 203 to access data from the data warehouse 205 by converting data from the data warehouse 205 into a required format for the communication protocol used by the network input/output entities 203.

Although the memory 107 is illustrated as a single component/circuitry it may be implemented as one or more separate components/circuitry some or all of which may be integrated/removable and/or may provide permanent/semi-permanent/ dynamic/cached storage.

Although the processor 105 is illustrated as a single component/circuitry it may be implemented as one or more separate components/circuitry some or all of which may be integrated/removable. The processor 105 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as fieldprogrammable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

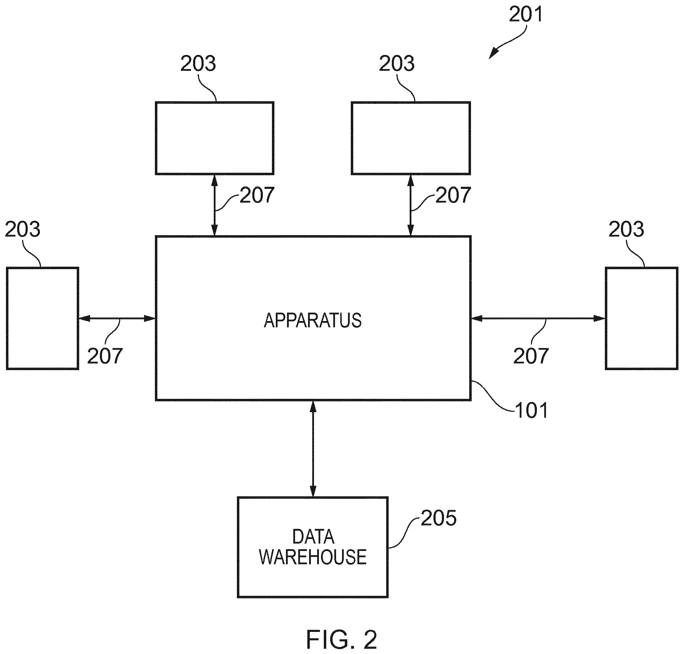

Fig. 2 shows a network 201 comprising an apparatus 101, a plurality of network input/output entities 203 and a data warehouse 205. It is to be appreciated that only components referred to in the following description are shown in Fig. 2 and that the network 201 could comprise additional components in implementations of the disclosure. In the example network 201 shown in Fig. 2 four network input/output entities 203 are shown. It is to be appreciated that this is just an example and any number of network input/output entities 203 could be provided in other examples of the disclosure.

The different components of the network 201 may be located remotely from each other. For instance the network input/output entities 203 could be located in different locations to each other and/or the network input/output entities 203 could be located in different locations to the apparatus 101. In some examples one or more components of the network 201 could be moveable so that the component has no fixed location. For example, one or more of the network input/output entities 203 could comprise a tracking device that is configured to be moved between different locations.

In other examples some components of the network 201 could be located within the same location or within proximate locations. For instance, some of the network input/output entities 203 could comprise a calendar application and a contact application and these could be stored in the same computing system.

The apparatus 101 may be as described above with reference to Fig. 1. The apparatus 101 may be provided on one or more devices such as one or more servers or other processing devices. The apparatus 101 may be located remotely from other components within the network 201.

The apparatus 101 may be configured to establish communication links 207 with the plurality of network input/output entities 203. Different types of communication protocols could be used to establish the different communication links 207. The communication protocol could define the set of rules that enable data to be transferred over the communication link 207. The communication protocol may define the format that data must be in in order to be transmitted over a communication link 207.

Any suitable communication protocol could be used to establish the communication links 207. The communication protocol that is used may depend on the type of network input/output entity 203 that the apparatus 101 is communicating with. The communication links 207 could use wired or wireless communication protocols. The communication links 207 could use short rang or long range communication protocols. The communication links 207 could enable analogue or digital communications. In some examples the communication protocols 207 could comprise one or more of; Structure Query Language (SQL), Open Database Connectivity (ODBC), Telephony Application Programming Interface (TAPI), Blockchain or any other suitable communication protocol.

The apparatus 101 is also configured to maintain the data warehouse 205. The apparatus 101 may maintain the data warehouse 205 by collecting data from the network input/output entities 203 and storing it within the data warehouse 205. The apparatus 101 is also configured to enable the different network input/output entities 203 to access the data warehouse 205

The network input/output entities 203 may comprise any input/output entities that can be coupled to the apparatus 101 to enable an exchange of data between the network input/output entity 203 and the apparatus 101. The network input/output entities 203 may be configured to establish a communication link 207 with the apparatus 101 to enable data to be exchanged via the communication link 207.

In some examples each of the different network input/output entities 203 could use a different communication protocol to communicate with the apparatus 101. In other examples the different network input/output entities 203 could be provided in different subsets where different subsets could use different communication protocols to communicate with the apparatus 101. There could be one or more network input/output entity 203 in each of the subsets. This configuration could enable some of the network input/output entities 203 to be configured to use the same communication protocols.

In the example shown in Fig. 2 each of the network input/output entities 203 communicates with the apparatus 101. Data may be exchanged between the network input/output entities 203 via the apparatus 101. The apparatus 101 may be configured to translate between different communication protocols so that the different network input/output entities 203 can communicate via the apparatus 101 and do not need to communicate directly with each other. In the example network 201 shown in Fig. 2 there are no direct communication links between the network input/output entities 203. The apparatus 101 may therefore enable network input/output entities 203 that use different communication protocols to communicate with each other.

The network input/output entities 203 may also be configured to perform one or more actions separately to the apparatus 101. The actions could comprise the control of a system which is external to the apparatus 101. For instance, once a network input/output entity 203 has obtained data from the apparatus 101 it can use that data to enable an action to be performed. This action could be performed independently of the apparatus 101 and the other components within the network 201. Once the data has been obtained from the apparatus 101 the action can be performed without further input from the apparatus 101 or other network input/output entities 203. The action could comprise the control of a physical system, the generation of a report or any other suitable action.

The data warehouse 205 may comprise any means for storing data. In some examples the data warehouse 205 could be provided within the memory 107 of the apparatus 101. In other examples the data warehouse 205 could be provided remotely to the apparatus 101. In such examples the data warehouse 205 could be stored on one or more remote devices. In some examples the data warehouse 205, or at least part of the data warehouse 205, could be stored in the cloud.

The data warehouse 205 is configured to store data that is obtained from the different network input/output entities 203. In such examples each of the network input/output entities 203, or a subset of the network input/output entities 203, may be configured to obtain data and provide the obtained data to the apparatus 101. The apparatus 101 can then store the obtained data in the data warehouse 205. The data obtained from each of the different network input/output entities 203 can be stored in the same data warehouse 205.

When the apparatus 101 receives data that is to be stored in the data warehouse 205 the format that the data is received in may be determined by the communication protocols that have been used for the communication link 207 between the apparatus 101 and the network input/output entity 203. This means that the apparatus 101 may receive data in different formats from the different network input/output entities 203. Before the data is stored in the data warehouse 205 the apparatus 101 may convert the data from the received format into a standard format for storage in the data warehouse 205.

Each of the network input/output entities 203 that is coupled to the apparatus 101 is enabled to access data from the data warehouse 205. As the data is all stored in the same data warehouse 205 this can be configured to enable a network input/output entity 203 to access data that originates from any of the other network input/output entities 203 within the network 201.

The network input/output entities 203 may be configured to access the data warehouse 205 via the apparatus 101. When the apparatus 101 retrieves data from the data warehouse 205 it may convert this into a format which is suitable for the network input/output entity 203 that has requested, or that requires, the data. The format that the data is converted into may be determined by the communication protocol that the network input/output entity 203 uses for the communication link 207 with the apparatus 101.

The apparatus 101 may be configured to enable translation of the data between any number of communication protocols. The computer program 109 that is stored within the memory 107 of the apparatus 101 may comprise computer program instructions which enable conversion of the data between the different communication protocols. If a new network input/output entity 203 is added to the network 201 that communicates with a new communication protocol that has not previously been used by the apparatus 101 then additional computer program instructions may be provided to the apparatus 101 to enable translation between the new communication protocol and the currently used communication protocols.

Fig. 3 shows a method that may be implemented using the example apparatus 101 and network 201 shown in Figs. 1 and 2.

The method comprises, at block 301 enabling communication between the apparatus 101 a plurality of network input/output entities 203. Different network input/output entities 203 are configured to use different communication protocols to communicate with the apparatus 101. In the example network 201 shown in Fig. 2 there are four network input/output entities 203 however it is to be appreciated that there may be any number of network input/output entities 203 configured to communicate with the apparatus 101.

In some examples the communication could be initiated by the network input/output entity 203. For instance, a trigger event could be detected by a network input/output entity 203 and in response to the trigger event the network input/output entity 203 could contact the apparatus 101. The trigger event that is detected will be depended upon the type of network 201 and the type of network input/output entities 203 within the network 201. For instance, where the network input/output entity 203 comprises a security system or location device the trigger event could be the arrival of a vehicle at a particular location. Where the network input/output entity 203 comprises a calendar or planning application the trigger event could be a time that corresponds to a time of a calendar event. Other trigger events could be used in other examples of the disclosure.

In other examples the communication could be initiated by the apparatus 101. For instance, the apparatus 101 could process data from the data warehouse 205 to determine that this data could be used by a network input/output entity 203 and then establish the communication link 207 so as to provide the data to the network input/output entity 203. For instance the data warehouse 205 could contain information which indicates the time of appointments. At the appropriate time the apparatus 101 may provide this information to security systems so that the security systems allow vehicles and personnel to enter a facility for a scheduled appointment. Other events could be used in other examples of the disclosure.

At block 303 the method comprises maintaining a data warehouse 205. The data warehouse 205 comprises data obtained from one or more of the plurality of network input/output entities 203 using the one or more different communication protocols.

In some examples at least some of the network input/output entities 203 may comprise one or more sensors which may be configured to automatically input data. The automatic input of data could be without user input at the network input/output entity 203. For instance a security system could comprise a reader configured to read registration plates of vehicles, or may have a scanner which may be configured to recognise a face, fingerprint or other identifier of personnel. This may automatically obtain identification data which can then be provided to the data warehouse 205.

In some examples the data may be input manually. For example a network input/output entity 203 could comprise a user interface which enables a user to input data for a calendar application, a contact application, an invoicing application or any other suitable types of application or network input/output entity 203.

When the apparatus 101 receives the data the apparatus 101 will convert the data into a format for storage in the data warehouse 205.

At block 305 the method comprises enabling each of the plurality of network input/output entities 203 to access data from the data warehouse 205 by converting data from the data warehouse 205 into a required format for the communication protocol used by the network input/output entities 203. This may enable the apparatus 101 to retrieve data from the data warehouse 205 and provide it to the network input/output entities 203 via the respective communication links 207.

In some examples the data may be provided in response to an input communication from a network input/output entity 203. For instance a security system could send a communication querying whether or not a vehicle is expected for an appointment. In response to this query the apparatus 101 can access the data warehouse 205 to review data obtained from a calendar application and provide a response to the security system. These actions can be performed without having to access or contact the network input/output entity 203 used for the calendar application because all the necessary information is provided in the data warehouse 205.

In some examples the data could be provided to a network input/output entity 203 without the need for an input communication from that network input/output entity 203. For instance, if it is determined that a vehicle has arrived for an appointment then other network input/output entities 203 that could be involved with the appointment could be sent data that could be used by those network input/output entities 203. For instance, an invoicing application could be sent data indicating that the appointment has taken place so that this can be added to an appropriate invoice schedule.

The blocks illustrated in the Fig. 3 may represent steps in a method and/or sections of code in the computer program 109. The illustration of a particular order to the blocks does not necessarily imply that there is a required or preferred order for the blocks and the order and arrangement of the block may be varied. Furthermore, it may be possible for some blocks to be omitted.

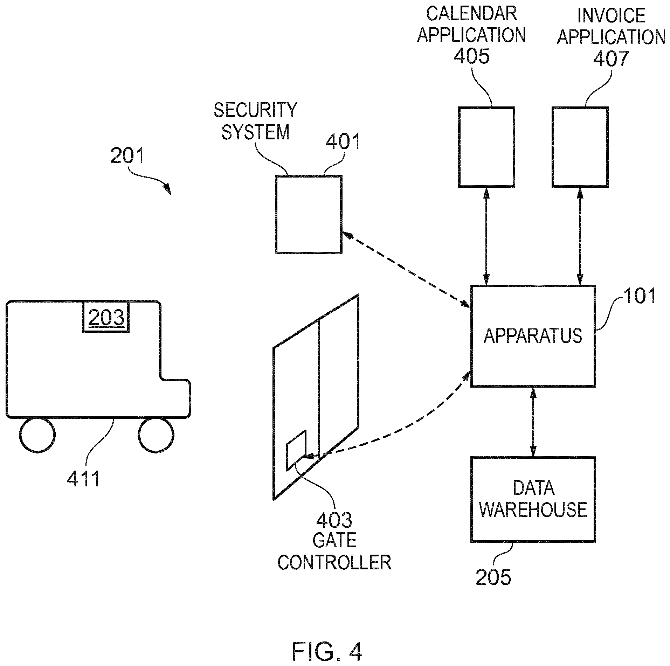

Fig. 4 shows an example of an implementation of the disclosure in use. In this example the network 201 is used in a vehicle maintenance facility. It is to be appreciated that this is just an illustrative example and that other types of network 201 could be used in other examples of the disclosure.

In this example the network 201 comprises an apparatus 101 and a data warehouse 205 which may be as described above. The network 201 also comprises a plurality of network input/output entities 203. In this example the network input/output entities 203 comprise a security system 401, a gate controller 403, a calendar application 405 and an invoicing application 407. It is to be appreciated that the network 201 could comprise additional components that are not shown in Fig. 4. For instance, additional network input/output entities 203, such as contact applications, could be provided.

The security system 401 could comprise means for recognising vehicles 411 or personnel. In the example network 201 shown in Fig. 4 the security system 401 comprises a camera or other imaging device which enable vehicles 411 to be identified. The vehicles 411 could be identified from the registration plates, from identification tags provided to the vehicles 411 or by any other suitable means.

The security system 401 could also comprise an output device. The output device could comprise any means which enables information to be presented to a user. The output device could comprise one or more displays, one or more audio devices or any other suitable means.

The gate controller 403 could comprise means for enabling a gate to be opened and closed. This could enable and prevent vehicles 411 from accessing the vehicle maintenance facility as required.

The gate controller 403 could be configured to be operated by a user. For example a user could manually operate a switch which causes the gate to opened and/or closed. The gate controller 403 could also be configured to be operated by the apparatus 101. In such examples a control signal could be provided via a communication link 207 from the apparatus 101 which controls whether the gate is opened and/or closed. In some examples this may allow for automatic control of the gate without any manual user input.

The calendar application 405 could comprise an application which enables scheduling of appointments within the vehicle maintenance facility. The scheduling of the appointments could require a user of the calendar application 405 to enter data manually using a user interface. The data could comprise data identifying a vehicle 411, a time and date of the appointment, the maintenance that is required during the appointment and any other suitable information.

The calendar application 405 may be stored within a computing system. The computing system could be a stand-alone computing device which could be a desk top computer, a lap top computer, a hand held computing device or any other suitable computing device. In some examples the computing system could comprise a plurality of networked computers or any other suitable interconnected devices.

The invoicing application 407 could comprise an application which enables invoices to be generated. The invoicing application 407 may enable work carried out to be associated with an account and enable invoices to be generated for that account. The maintaining of the accounts and the generation of the invoices could require a user of the invoicing application 407 to enter data manually using a user interface. The data could comprise data identifying a vehicle, work carried out in relation to the vehicle and any other data. In some examples the maintaining of the accounts and the generation of invoices could also use data that is obtained from other network input/output entities 203. For instance data relating to work carried out could be provided from a network input/output entity 203 to the apparatus 101 and stored in the data warehouse 205. This data could then be provided to the invoicing application 407 when required.

The invoicing application 407 may be stored within a computing system. The computing system could be a stand-alone computing device which could be a desk top computer, a lap top computer, a hand held computing device or any other suitable computing device. In some examples the computing system could comprise a plurality of networked computers or any other suitable interconnected devices.

As an illustrative example of how this network 201 could be used a vehicle 411 could arrive at the vehicle maintenance facility. The security system 401 is configured to detect the vehicle 411 and obtain data identifying the vehicle 411. The data identifying the vehicle 411 may be transmitted from the security system 401 to the apparatus 101. This data can be transmitted using a first communication protocol with the data in a first format.

The apparatus 101 may then, if needed, convert the data to a different format to enable the data to be checked against data stored in the data warehouse 205. This can enable the apparatus 101 to determine if the vehicle 411 is associated with any of the other network input/output entities 203. In this example the apparatus 101 can check data that has previously been obtained from the calendar application 405 and stored in the data warehouse 205 to see if the vehicle 411 is scheduled to attend an appointment.

If the apparatus 101 determines that the vehicle 411 is scheduled for an appointment then the apparatus 101 can notify the security system 401 that an authorised vehicle 411 has arrived. The security system 401 may then provide an output to a user of the security system that the vehicle 411 is authorised. For instance a notification could be displayed on a display or audio information could be provided.

If the apparatus 101 determines that the vehicle is not scheduled for an appointment then the apparatus 101 can notify the security system 401 that an unauthorised vehicle 411 has arrived. The security system 401 may then provide an output to a user that the vehicle 411 is not authorised.

The apparatus 101 may also be configured to send outputs to other network input/output entities 203. For instance, the apparatus 101 could send an output to the gate controller 403. This could control whether the gate is opened for an authorised vehicle 411 or if it remains locked for an unauthorised vehicle 411. This output could be sent automatically in response to the apparatus 101 querying the data warehouse 205 and without any specific input from a user of the security system 401 or gate controller 403. Therefore in this example the apparatus 101 allows for the automatic control of a physical system for opening a gate by enabling network input/output entities 203 to access data that has been previously provided other network input/output entities 203.

In some examples the data relating to the scheduled appointment could also be provided to other network input/output entities 203 when the authorised vehicle 411 is detected. For instance the apparatus 101 could identify other network input/output entities 203 that could make use of the data relating to the scheduled appointment. The apparatus 101 could identify other actions that could be performed by other network input/output entities 203 using the data relating to the scheduled appointment. The actions that could be performed could be the control of a physical system, such as opening of a gate, the generation of further information, such as the generation of a report, or any other suitable action.

In the example of Fig. 4 the apparatus 101 could identify that the record of completed appointments is used to keep the accounts in the invoicing application 407 up to date. Therefore the apparatus 101 can send a control signal to the invoicing application 407 to cause the invoicing application to perform an action. The control signal could comprise data relating to the scheduled appointment and the arrival of the authorised vehicle 411. The control signal could cause the action of enabling one or more accounts in the invoicing application to be updated.

In this example the data is sent to the invoicing application 407 in response to the apparatus 101 identifying an event that has occurred elsewhere in the network 201. There is no trigger event which occurs at the invoicing application 407 or a request for data from the invoicing application 407. The control signal is sent automatically by the apparatus 101 to the invoicing application 407 or any other suitable network input/output entity 203.

In other examples the invoicing application 407 could make a request for data from the data warehouse 205. For instance, in response to a user input, or at a scheduled time a request could be sent to the apparatus 101 for all data relating to work that has been carried out in relation to an account. In response to such a request the apparatus 101 can query the data warehouse 205 to obtain data relating to the work carried out. This data could be originally obtained from a plurality of different network input/output entities 203. Once the apparatus 101 has retrieved the relevant data from the data warehouse 205 the data is converted into a suitable format and provided to the invoicing application 407. The invoicing application 407 could then perform any suitable action in relation to the obtained data. For instance the invoicing application 407 could generate a report which could be provided to a user of the invoicing application 407. In some examples the report could cause further actions such as the generation of one or more invoices, or any other suitable action.

In the described examples the invoicing application 407 only has to communicate with the single apparatus 101 in order to generate a report which may contain data originating from any number of other network input/output entities 203. The invoicing application 407 does not need to be able to communicate with the other network input/output entities 203 as it can obtain all the necessary data from the apparatus 101 and the associated data warehouse 205. This therefore provides for an effective way of linking different types of network input/output entities 203 together.

In some examples machine learning may be used by the apparatus 101 to identify data within the data warehouse 205 and enable one or more network input/output entities 203 to perform an associated action. For instance machine learning may be used to help the apparatus 101 identify the circumstances in which data it has obtained could be used by the different network input/output entities 203.

It is to be appreciated that the network 201 shown in Fig. 4 is an example and that other types of network 201 could be used in other examples of the disclosure. For instance in some examples the network 201 could comprise a rail management system. In such cases a first network input/output entity 203 could comprise a controller which is configured to control a switch to control the signals in a section of the rail network. A second network input/output entity 203 could comprise a location detection means. The location detection means could be provided in a vehicle and could be configured to identify when the vehicle is approaching a railway line. In other examples the location detection means could be provided at the crossing of the railway line or close to the crossing of the railway line and could be configured to provide an indication that a vehicle is approaching the crossing.

In this example the controller for controlling the signals in the rail network could use an analogue communication protocol. This could be an existing control means that has been in the rail network for many years. By contrast the location detection means for detecting the location of the vehicle could be use a digital communication protocol. The digital communication protocol could be used for controlling autonomous vehicles and could be one that was not even in existence when the signals in the rail network were created.

In such examples the location detection means can provide information to an apparatus 101 indicating that a vehicle is approaching a crossing. The apparatus 101 can then check a data warehouse 205 to determine if any signals need to be changed, for instance it may check the location of one or trains within the rail network. In response to this it can send a control input to the signal controller to change the signals to prevent the train and the vehicle from crossing the railway line at the same time.

In other examples the network 201 that is used could comprise the internet of things. The internet of things could comprise a plurality of distributed devices which could all be configured to communicate with an apparatus 101. The distributed devices could comprise household appliances, vehicles, communication devices and any other suitable devices. This could enable, for instance information relating to a communication device to be stored in a data warehouse 205 and accessed by a household appliance even where the household appliance is not capable of communicating directly with the communication device.

For instance a user could enter an appointment in a calendar application in their mobile phone. This could then be transmitted to the apparatus 101 and stored in the data warehouse 205. A household appliance such as a heating controller could then send a query to the apparatus 101 querying the time at which a user is likely to return home. The apparatus 101 can retrieve this information from the data warehouse and provide it to the heating controller. This can then be used to determine the time at which the heating is turned on.

In examples of the disclosure none of the network input/output entities 203 need to communicate directly with the other network input/output entities 203. Instead they can communicate via the apparatus 101. This enables a first network input/output entity 203 to use a first communication protocol to communicate with the apparatus 101 and a second network input/output entity 203 to use a second communication protocol to communicate with the apparatus 101. In order to enable the different network input/output entities 203 to communicate with each other the apparatus 101 can convert data between the first and second communication protocols. This can enable the network input/output entities 203 to communicate with each other without having to update or reprogram the existing network input/output entities 203. This can provide for an effective method of linking existing network input/output entities 203.

In some examples one of the network input/output entities 203 could be replaced with a different network input/output entity. For instance, in the system shown in Fig. 4 the calendar application 405 could be replaced with a newer calendar application 405. The newer calendar application could use a different communication protocol. Because the apparatus 101 acts as a translator between the respective network input/output entities 203 this can enable the new network input/output entity 203 to replace the old network input/output entity 203 without requiring any updates or changes to the other network input/output entities 203 in the network 201.

In such examples the apparatus 101 may use the new communication protocol to communicate with the new network input/output entity 203 and to enable the new network input/output entity 203 to access the data warehouse 205. In some cases the computer program instructions that are provided within the apparatus 101 may be updated so as to enable the apparatus 101 to use the new communication protocol. This update may be made without interrupting or affecting communications with the other network input/output entities 203.

Therefore the examples of the disclosure also allow the network input/output entities 203 to be interchanged. This makes it easier for users to update or change their network input/output entities 203. Also once network input/output entities 203 have been linked within a network 201 they are not restricted by the existing communication protocols that are currently used within the network 201 because the apparatus 101 can be updated to use additional communication protocols.

In this description the term coupled means operationally coupled. Any number of intervening components may be provided between coupled entities including zero intervening components.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus (101) comprising means for:
enabling communication with a plurality of network input/output entities (203) wherein different network input/output entities are configured to use different communication protocols to communicate with the apparatus;
maintaining a data warehouse (205) where the data warehouse comprises data obtained from one or more of the plurality of network input/output entities using one or more different communication protocols;
enabling each of the plurality of network input/output entities to access data from the data warehouse by converting data from the data warehouse into a required format for the communication protocol used by the network input/output entities; and
obtaining data, in a first format, from a first network input/output entity using a first communication protocol;
wherein the apparatus is **characterized by** further comprising means for:
converting the data into a different format such that the data is checked against data,
stored in the data warehouse, previously obtained from a different one of the one or
more of the plurality of network input/output entities using a different communication protocol;
based on the checking, automatically finding one or more actions associated with the obtained data in the data warehouse; and
sending a control signal to a second network input/output entity to enable the second network input/output entity to perform an action associated with the obtained data.

2. An apparatus as claimed in any preceding claim comprising means for enabling communication between at least a first network input/output entity using a first communication protocol and at least a second network input/output entity using a second communication protocol via the apparatus by causing the apparatus to convert data between the first and second communication protocols.

3. An apparatus as claimed in claim 2 wherein the communication via the apparatus enables the first network input/output entity using the first communication protocol to be replaced with a third network input/output entity using a third communication protocol such that the third network input/output entity can communicate with the second network input/output entity without the second network input/output entity having to change communication protocols.

4. An apparatus as claimed in claim 3 comprising means for determining that a first network input/output entity that used a first communication protocol has been replaced by a third network input/output entity that uses a third communication protocol and enabling the third network input/output entity to access the data warehouse using the third communication protocol.

5. An apparatus as claimed in any preceding claim comprising means for identifying one or more network input/output entities that could make use of the obtained data relating to a scheduled appointment identified from calendar application data previously obtained from a network input/output entity and stored in the data warehouse.

6. An apparatus as claimed in any preceding claim wherein the action to be performed by the second network input/output entity comprises a control of a physical system.

7. An apparatus as claimed in any preceding claim wherein machine learning is used to identify data within the data warehouse and enable one or more network input/output entities to perform an associated action.

8. An apparatus as claimed in any preceding claim comprising means for collecting data from the plurality of network input/output entities and storing the data in the data warehouse.

9. An apparatus as claimed in claim 8 comprising means for enabling any of the plurality of network input/output entities to access the data warehouse to generate a report using data from the data warehouse.

10. An apparatus as claimed in claim 9 wherein the report is provided to a user of the network input/output entity.

11. An apparatus as claimed in any of claims 9 to 10 wherein the report causes an action by a system associated with the network input/output entity.

12. An apparatus as claimed in any preceding claim wherein the different communication protocols used by the plurality of network input/output entities comprises one or more of; Structure Query Language (SQL), Open Database Connectivity (ODBC), Telephony Application Programming Interface (TAPI), Blockchain.

13. A method comprising:
enabling (301) communication with a plurality of network input/output entities (203) wherein different network input/output entities are configured to use different communication protocols to communicate with the apparatus;
maintaining (303) a data warehouse (205) where the data warehouse comprises data obtained from one or more of the plurality of network input/output entities using one or more different communication protocols;
enabling (305) each of the plurality of network input/output entities to access data from the data warehouse by converting data from the data warehouse into a required format for the communication protocol used by the network input/output entities; and
obtaining data, in a first format, from a first network input/output entity using a first communication protocol;
wherein the method is **characterized by** further comprising:
converting the data into a different format such that the data is checked against data, stored in the data warehouse, previously obtained from a different one of the one or
more of the plurality of network input/output entities using a different communication protocol;
based on the checking, automatically finding one or more actions associated with the obtained data in the data warehouse; and
sending a control signal to a second network input/output entity to enable the second network input/output entity to perform an action associated with the obtained data.

14. A computer program (109) comprising computer program instructions that, when executed by processing circuitry (105), cause:
enabling communication with a plurality of network input/output entities (203) wherein different network input/output entities are configured to use different communication protocols to communicate with the apparatus;
maintaining a data warehouse (205) where the data warehouse comprises data obtained from one or more of the plurality of network input/output entities using one or more different communication protocols;
enabling each of the plurality of network input/output entities to access data from the data warehouse by converting data from the data warehouse into a required format for the communication protocol used by the network input/output entities; and
obtaining data, in a first format, from a first network input/output entity using a first communication protocol;
wherein the computer program is **characterized by** further comprising computer program instructions that, when executed by the processing circuitry cause:
converting the data into a different format such that the data is checked against data, stored in the data warehouse, previously obtained from a different one of the one or
more of the plurality of network input/output entities using a different communication protocol;
based on the checking, automatically finding one or more actions associated with the obtained data in the data warehouse; and
sending a control signal to a second network input/output entity to enable the second network input/output entity to perform an action associated with the obtained data.

## Patentansprüche

1. Vorrichtung (101), umfassend Einrichtungen für Folgendes:
Ermöglichen einer Kommunikation mit einer Vielzahl von Netzwerkein-/ausgabeeinheiten (203), wobei verschiedene Netzwerkein-/ausgabeeinheiten konfiguriert sind, um verschiedene Kommunikationsprotokolle zu verwenden, um mit der Vorrichtung zu kommunizieren;
Führen eines Datenlagers (205), wobei das Datenlager Daten umfasst, die unter Verwendung eines oder mehrerer unterschiedlicher Kommunikationsprotokolle von einer oder mehreren der Vielzahl von Netzwerkein-/ausgabeeinheiten erlangt werden;
Ermöglichen, dass jede der Vielzahl von Netzwerkein-/ausgabeeinheiten auf Daten aus dem Datenlager zugreifen kann, indem Daten aus dem Datenlager in ein erforderliches Format für das von den Netzwerkein-/ausgabeeinheiten verwendete Kommunikationsprotokoll konvertiert werden; und Erlangen von Daten in einem ersten Format von einer ersten Netzwerkein-/ausgabeeinheit unter Verwendung eines ersten Kommunikationsprotokolls;
wobei die Vorrichtung **dadurch gekennzeichnet ist, dass** sie ferner Einrichtungen für Folgendes umfasst
Konvertieren der Daten in ein anderes Format, sodass die Daten mit in dem Datenlager gespeicherten Daten verglichen werden, die zuvor unter Verwendung eines anderen Kommunikationsprotokolls von einer anderen von der einen oder den mehreren der Vielzahl von Netzwerkein-/ausgabeeinheiten erlangt wurden;
basierend auf der Überprüfung, automatisches Ermitteln einer oder mehrerer Aktionen, die mit den erlangten Daten in dem Datenlager assoziiert sind, und
Senden eines Steuersignals an eine zweite Netzwerkein-/ausgabeeinheit, um der zweiten Netzwerkein-/ausgabeeinheit zu ermöglichen, eine Aktion durchzuführen, die mit den erlangten Daten assoziiert ist.

2. Vorrichtung nach einem der vorherigen Ansprüche, umfassend Einrichtungen, um eine Kommunikation zwischen mindestens einer ersten Netzwerkein-/ausgabeeinheit, die ein erstes Kommunikationsprotokoll verwendet, und mindestens einer zweiten Netzwerkein-/ausgabeeinheit, die ein zweites Kommunikationsprotokoll verwendet, über die Vorrichtung zu ermöglichen, indem die Vorrichtung veranlasst wird, Daten zwischen dem ersten und dem zweiten Kommunikationsprotokoll zu konvertieren.

3. Vorrichtung nach Anspruch 2, wobei die Kommunikation über die Vorrichtung der ersten Netzwerkein-/ausgabeeinheit, die das erste Kommunikationsprotokoll verwendet, ermöglicht, durch eine dritte Netzwerkein-/ausgabeeinheit ersetzt zu werden, die ein drittes Kommunikationsprotokoll verwendet, sodass die dritte Netzwerkein-/ausgabeeinheit mit der zweiten Netzwerkein-/ausgabeeinheit kommunizieren kann, ohne dass die zweite Netzwerkein-/ausgabeeinheit Kommunikationsprotokolle wechseln muss.

4. Vorrichtung nach Anspruch 3, umfassend Einrichtungen zum Bestimmen, dass eine erste Netzwerkein-/ausgabeeinheit, die ein erstes Kommunikationsprotokoll verwendet hat, durch eine dritte Netzwerkein-/ausgabeeinheit ersetzt wurde, die ein drittes Kommunikationsprotokoll verwendet, und Ermöglichen, dass die dritte Netzwerkein-/ausgabeeinheit unter Verwendung des dritten Kommunikationsprotokolls auf das Datenlager zugreift.

5. Vorrichtung nach einem der vorherigen Ansprüche, umfassend Einrichtungen zum Identifizieren einer oder mehrerer Netzwerkein-/ausgabeeinheiten, die die erlangten Daten in Bezug auf einen geplanten Termin nutzen könnten, der aus Kalenderanwendungsdaten identifiziert wird, die zuvor von einer Netzwerkein-/ausgabeeinheit erlangt und in dem Datenlager gespeichert wurden.

6. Vorrichtung nach einem der vorherigen Ansprüche, wobei die Aktion, die von der zweiten Netzwerkein-/ausgabeeinheit durchgeführt werden soll, eine Steuerung eines physischen Systems umfasst.

7. Vorrichtung nach einem der vorherigen Ansprüche, wobei maschinelles Lernen verwendet wird, um Daten innerhalb des Datenlagers zu identifizieren und einer oder mehreren Netzwerkein-/ausgabeeinheiten zu ermöglichen, eine assoziierte Aktion durchzuführen.

8. Vorrichtung nach einem der vorherigen Ansprüche, umfassend Einrichtungen zum Sammeln von Daten aus der Vielzahl von Netzwerkein-/ausgabeeinheiten und zum Speichern der Daten in dem Datenlager.

9. Vorrichtung nach Anspruch 8, umfassend Einrichtungen, die es jeder der mehreren Netzwerkein-/ausgabeeinheiten ermöglichen, auf das Datenlager zuzugreifen, um unter Verwendung von Daten aus dem Datenlager einen Bericht zu erstellen.

10. Vorrichtung nach Anspruch 9, wobei der Bericht einem Benutzer der Netzwerkein-/ausgabeeinheit bereitgestellt wird.

11. Vorrichtung nach einem der Ansprüche 9 bis 10, wobei der Bericht eine Aktion durch ein System bewirkt, das mit der Netzwerkein-/ausgabeeinheit assoziiert ist.

12. Vorrichtung nach einem der vorherigen Ansprüche, wobei die verschiedenen Kommunikationsprotokolle, die von der Vielzahl von Netzwerkein-/ausgabeeinheiten verwendet werden, eines oder mehrere von Folgenden umfassen: Structure Query Language (SQL), Open Database Connectivity (ODBC), Telephony Application Programming Interface (TAPI), Blockchain.

13. Verfahren, umfassend:
Ermöglichen (301) einer Kommunikation mit einer Vielzahl von Netzwerkein-/ausgabeeinheiten (203), wobei verschiedene Netzwerkein-/ausgabeeinheiten konfiguriert sind, um verschiedene Kommunikationsprotokolle zu verwenden, um mit der Vorrichtung zu kommunizieren;
Führen (303) eines Datenlagers (205), wobei das Datenlager Daten umfasst, die unter Verwendung eines oder mehrerer unterschiedlicher Kommunikationsprotokolle von einer oder mehreren der Vielzahl von Netzwerkein-/ausgabeeinheiten erlangt werden;
Ermöglichen (305), dass jede der Vielzahl von Netzwerkein-/ausgabeeinheiten auf Daten aus dem Datenlager zugreifen kann, indem Daten aus dem Datenlager in ein erforderliches Format für das von den Netzwerkein-/ausgabeeinheiten verwendete Kommunikationsprotokoll konvertiert werden; und Erlangen von Daten in einem ersten Format von einer ersten Netzwerkein-/ausgabeeinheit unter Verwendung eines ersten Kommunikationsprotokolls;
wobei das Verfahren **dadurch gekennzeichnet ist, dass** es ferner Folgendes umfasst:
Konvertieren der Daten in ein anderes Format, sodass die Daten mit in dem Datenlager gespeicherten Daten verglichen werden, die zuvor unter Verwendung eines anderen Kommunikationsprotokolls von einer anderen von der einen oder den mehreren der Vielzahl von Netzwerkein-/ausgabeeinheiten erlangt wurden;
basierend auf der Überprüfung, automatisches Ermitteln einer oder mehrerer Aktionen, die mit den erlangten Daten in dem Datenlager assoziiert sind, und
Senden eines Steuersignals an eine zweite Netzwerkein-/ausgabeeinheit, um der zweiten Netzwerkein-/ausgabeeinheit zu ermöglichen, eine Aktion durchzuführen, die mit den erlangten Daten assoziiert ist.

14. Computerprogramm (109), umfassend Computerprogrammanweisungen, die, wenn sie von einer Verarbeitungsschaltung (105) ausgeführt werden, Folgendes bewirken:
Ermöglichen einer Kommunikation mit einer Vielzahl von Netzwerkein-/ausgabeeinheiten (203), wobei verschiedene Netzwerkein-/ausgabeeinheiten konfiguriert sind, um verschiedene Kommunikationsprotokolle zu verwenden, um mit der Vorrichtung zu kommunizieren;
Führen eines Datenlagers (205), wobei das Datenlager Daten umfasst, die unter Verwendung eines oder mehrerer unterschiedlicher Kommunikationsprotokolle von einer oder mehreren der Vielzahl von Netzwerkein-/ausgabeeinheiten erlangt werden;
Ermöglichen, dass jede der Vielzahl von Netzwerkein-/ausgabeeinheiten auf Daten aus dem Datenlager zugreifen kann, indem Daten aus dem Datenlager in ein erforderliches Format für das von den Netzwerkein-/ausgabeeinheiten verwendete Kommunikationsprotokoll konvertiert werden; und Erlangen von Daten in einem ersten Format von einer ersten Netzwerkein-/ausgabeeinheit unter Verwendung eines ersten Kommunikationsprotokolls;
wobei das Computerprogramm **dadurch gekennzeichnet ist, dass** es ferner Computerprogrammanweisungen umfasst, die, wenn sie von der Verarbeitungsschaltung ausgeführt werden, Folgendes bewirken:
Konvertieren der Daten in ein anderes Format, sodass die Daten mit in dem Datenlager gespeicherten Daten verglichen werden, die zuvor unter Verwendung eines anderen Kommunikationsprotokolls von einer anderen von der einen oder den mehreren der Vielzahl von Netzwerkein-/ausgabeeinheiten erlangt wurden;
basierend auf der Überprüfung, automatisches Ermitteln einer oder mehrerer Aktionen, die mit den erlangten Daten in dem Datenlager assoziiert sind, und
Senden eines Steuersignals an eine zweite Netzwerkein-/ausgabeeinheit, um der zweiten Netzwerkein-/ausgabeeinheit zu ermöglichen, eine Aktion durchzuführen, die mit den erlangten Daten assoziiert ist.

## Revendications

1. Appareil (101) comprenant des moyens destinés à :
activer la communication avec une pluralité d'entités d'entrée/sortie de réseau (203), différentes entités d'entrée/sortie de réseau étant configurées pour utiliser différents protocoles de communication afin de communiquer avec l'appareil ;
maintenir un entrepôt de données (205) où l'entrepôt de données comprend des données obtenues à partir d'une ou plusieurs entités de la pluralité d'entités d'entrée/sortie de réseau utilisant un ou plusieurs protocoles de communication différents ;
autoriser à chacune de la pluralité d'entités d'entrée/sortie de réseau d'accéder aux données de l'entrepôt de données en convertissant les données de l'entrepôt de données en un format requis pour le protocole de communication utilisé par les entités d'entrée/sortie de réseau ; et
obtenir des données, dans un premier format, à partir d'une première entité d'entrée/sortie de réseau utilisant un premier protocole de communication ;
ledit appareil étant **caractérisé en ce qu'**il comprend en outre des moyens destinés à :
convertir les données en un format différent de sorte que les données soient vérifiées par rapport aux données, stockées dans l'entrepôt de données, précédemment obtenues à partir d'une entité différente parmi lesdites une ou plusieurs entités de la pluralité d'entités d'entrée/sortie de réseau utilisant un protocole de communication différent ;
sur la base de la vérification, rechercher automatiquement une ou plusieurs actions associées aux données obtenues dans l'entrepôt de données ; et
envoyer un signal de commande à une deuxième entité d'entrée/sortie de réseau pour autoriser la deuxième entité d'entrée/sortie de réseau à effectuer une action associée aux données obtenues.

2. Appareil selon l'une quelconque des revendications précédentes, comprenant des moyens destinés à activer la communication entre au moins une première entité d'entrée/sortie de réseau utilisant un premier protocole de communication et au moins une deuxième entité d'entrée/sortie de réseau utilisant un deuxième protocole de communication via l'appareil en amenant l'appareil à convertir les données entre les premier et deuxième protocoles de communication.

3. Appareil selon la revendication 2, ladite communication via l'appareil autorisant le remplacement de la première entité d'entrée/sortie de réseau utilisant le premier protocole de communication par une troisième entité d'entrée/sortie de réseau utilisant un troisième protocole de communication de sorte que la troisième entité d'entrée/sortie de réseau puisse communiquer avec la deuxième entité d'entrée/sortie de réseau sans que la deuxième entité d'entrée/sortie de réseau n'ait à changer de protocole de communication.

4. Appareil selon la revendication 3, comprenant des moyens destinés à déterminer qu'une première entité d'entrée/sortie de réseau qui utilisait un premier protocole de communication a été remplacée par une troisième entité d'entrée/sortie de réseau qui utilise un troisième protocole de communication et à autoriser la troisième entité d'entrée/sortie de réseau à accéder à l'entrepôt de données en utilisant le troisième protocole de communication.

5. Appareil selon l'une quelconque des revendications précédentes, comprenant des moyens destinés à identifier une ou plusieurs entités d'entrée/sortie de réseau qui pourraient utiliser les données obtenues relatives à un rendez-vous programmé identifié à partir de données d'application de calendrier précédemment obtenues à partir d'une entité d'entrée/sortie de réseau et stockées dans l'entrepôt de données.

6. Appareil selon l'une quelconque des revendications précédentes, ladite action devant être exécutée par la deuxième entité d'entrée/sortie de réseau comprenant une commande d'un système physique.

7. Appareil selon l'une quelconque des revendications précédentes, ledit apprentissage automatique étant utilisé pour identifier des données dans l'entrepôt de données et autoriser une ou plusieurs entités d'entrée/sortie de réseau à effectuer une action associée.

8. Appareil selon l'une quelconque des revendications précédentes, comprenant des moyens destinés à collecter des données à partir de la pluralité d'entités d'entrée/sortie de réseau et à stocker les données dans l'entrepôt de données.

9. Appareil selon la revendication 8, comprenant des moyens destinés à autoriser l'une quelconque de la pluralité d'entités d'entrée/sortie de réseau à accéder à l'entrepôt de données pour générer un rapport utilisant des données provenant de l'entrepôt de données.

10. Appareil selon la revendication 9, ledit rapport étant fourni à un utilisateur de l'entité d'entrée/sortie de réseau.

11. Appareil selon l'une quelconque des revendications 9 à 10, ledit rapport provoquant une action par un système associé à l'entité d'entrée/sortie de réseau.

12. Appareil selon l'une quelconque des revendications précédentes, lesdits différents protocoles de communication utilisés par la pluralité d'entités d'entrée/sortie de réseau comprenant un ou plusieurs protocoles parmi ; Structure Query Language (SQL), Open Database Connectivity (ODBC), Telephony Application Programming Interface (TAPI), Blockchain.

13. Procédé comprenant :
l'activation (301) de la communication avec une pluralité d'entités d'entrée/sortie de réseau (203), différentes entités d'entrée/sortie de réseau étant configurées pour utiliser différents protocoles de communication afin de communiquer avec l'appareil ;
le maintien (303) d'un entrepôt de données (205) où l'entrepôt de données comprend des données obtenues à partir d'une ou plusieurs entités parmi la pluralité d'entités d'entrée/sortie de réseau utilisant un ou plusieurs protocoles de communication différents ;
la permission (305) à chacune de la pluralité d'entités d'entrée/sortie de réseau d'accéder aux données de l'entrepôt de données en convertissant les données de l'entrepôt de données en un format requis pour le protocole de communication utilisé par les entités d'entrée/sortie de réseau ; et
l'obtention des données, dans un premier format, à partir d'une première entité d'entrée/sortie de réseau utilisant un premier protocole de communication ;
ledit procédé étant **caractérisé en ce qu'**il comprend en outre :
la conversion des données en un format différent de sorte que les données soient vérifiées par rapport aux données, stockées dans l'entrepôt de données, précédemment obtenues à partir d'une entité différente parmi lesdites une ou plusieurs entités de la pluralité d'entités d'entrée/sortie de réseau utilisant un protocole de communication différent ;
sur la base de la vérification, la recherche automatique d'une ou plusieurs actions associées aux données obtenues dans l'entrepôt de données ; et
l'envoi d'un signal de commande à une deuxième entité d'entrée/sortie de réseau pour autoriser la deuxième entité d'entrée/sortie de réseau à effectuer une action associée aux données obtenues.

14. Programme informatique (109) comprenant des instructions de programme informatique qui, lorsqu'elles sont exécutées par un circuit de traitement (105), provoquent :
l'activation de la communication avec une pluralité d'entités d'entrée/sortie de réseau (203), différentes entités d'entrée/sortie de réseau étant configurées pour utiliser différents protocoles de communication afin de communiquer avec l'appareil ;
le maintien d'un entrepôt de données (205) où l'entrepôt de données comprend des données obtenues à partir d'une ou plusieurs entités de la pluralité d'entités d'entrée/sortie de réseau utilisant un ou plusieurs protocoles de communication différents ;
l'autorisation à chacune de la pluralité d'entités d'entrée/sortie de réseau d'accéder aux données de l'entrepôt de données en convertissant les données de l'entrepôt de données en un format requis pour le protocole de communication utilisé par les entités d'entrée/sortie de réseau ; et
l'obtention des données, dans un premier format, à partir d'une première entité d'entrée/sortie de réseau utilisant un premier protocole de communication ;
ledit programme informatique étant **caractérisé en ce qu'**il comprend en outre des instructions de programme informatique qui, lorsqu'elles sont exécutées par le circuit de traitement, provoquent :
la conversion des données en un format différent de sorte que les données soient vérifiées par rapport aux données, stockées dans l'entrepôt de données, précédemment obtenues à partir d'une entité différente parmi lesdites une ou plusieurs entités de la pluralité d'entités d'entrée/sortie de réseau utilisant un protocole de communication différent ;
sur la base de la vérification, la recherche automatique d'une ou plusieurs actions associées aux données obtenues dans l'entrepôt de données ; et
l'envoi d'un signal de commande à une deuxième entité d'entrée/sortie de réseau pour autoriser la deuxième entité d'entrée/sortie de réseau à effectuer une action associée aux données obtenues.
